# EUROPÄISCHE PATENTSCHRIFT

(11) **EP 0 876 194 B1**
(45) Veröffentlichungstag und Bekanntmachung des Hinweises auf die Patenterteilung: **01.12.1999**
(21) Anmeldenummer: 96943854.8
(22) Anmeldetag: 12.09.1996
(51) Int. Cl.: B01D 53/86, B01D 53/88, B01D 45/14

(54) **FILTER- ODER KATALYSATORVORRICHTUNG**
FILTER OR CATALYTIC-CONVERTER DEVICE
FILTRE OU CONVERTISSEUR CATALYTIQUE

(30) Priorität: 18.09.1995 DE 29514798 U; 26.03.1996 DE 29605508 U
(43) Veröffentlichungstag der Anmeldung: 11.11.1998
(73) Patentinhaber: Eder Maschinenfabrik GmbH, 84048 Mainburg (DE)
(72) Erfinder: THEILER, Anton, D-94577 Winzer (DE)
(74) Vertreter: Beck, Alexander, Dipl.-Ing.
(86) Internationale Anmeldenummer: DE9601710
(87) Internationale Veröffentlichungsnummer: WO9710882

(56) Entgegenhaltungen:
- WO-A-96/07464
- DE-A- 2 138 413
- DE-A- 3 840 819
- DE-A- 4 240 558
- DE-B- 2 350 086

## Beschreibung

Die vorliegende Erfindung betrifft eine Filter- oder Katalysatorvorrichtung, die von einem fluidem Medium durchströmt wird. Die vorliegende Erfindung betrifft dabei Filtervorrichtungen zum Abscheiden von in dem fluiden Medium verteilten Aerosolen und/oder Feststoffen durch Niederschlagen auf einer Oberfläche. Weiter betrifft die vorliegende Erfindung Katalysatorvorrichtungen, bei denen das fluide Medium mit einer katalytisch wirkenden Oberfläche in Berührung gebracht wird, um entsprechende chemische Reaktionen in dem fluiden Medium zu bewirken.

Der hiezu nächstgelegene Stand der Technik ergibt sich aus der DE-A-3840819. Diese zeigt bereits eine Filtervorrichtung, bei der ein fluides Medium in einem Gehäuse möglichst vollständig mit der Oberfläche von im Gehäuse befindlichen Filterelementen mit einer Vielzahl von in Strömungsrichtung des Mediums verlaufenden, kleinen Öffnungen in Berührung gebracht wird. Dabei sind bewegliche Filterplatten mit dazwischenliegenden feststehenden Umlenkplatten ohne Öffnungen vorgesehen.

Bei derartigen Vorrichtungen besteht das Hauptproblem darin, möglichst das gesamte fluide Medium mit einer Oberfläche in Kontakt zu bringen, wobei gleichzeitig der Strömungswiderstand für das fluide Medium minimiert werden soll.

Erfindungsgemäß wird diese Aufgabe durch die Merkmale des Anspruchs 1 gelöst.

Sofern diese erfindungsgemäße Konstruktion als Ölfilter für die Kurbelgehäuseabgase im Ansaugbereich des Vergasers eines Vergasermotors oder als Abgasreinigungsvorrichtung im Auspuffstrang eines Kolbenmotors Verwendung findet, zeigt sich ein weiterer erheblicher Vorteil darin, daß die Vorrichtung wie ein Schalldämpfer wirkt und die Ansaug- bzw. Auspuffgeräusche erheblich vermindert.

Dabei ist es bevorzugt, daß die bewegbaren Teile in einem Zylinderförmigen Gehäuse rotieren, da bei einer rotierenden Bewegung der Antrieb der bewegbaren Teile den geringsten Energieaufwand erfordert. Aus der Rotationsbewegung folgt die Zylinderform des Gehäuses.
Dabei ist weiter bevorzugt, daß die Rotationsachse der bewegbaren Teile coaxial zu der Zylinderform des Gehäuses angeordnet ist. Auf diese Weise kann der Platzbedarf der Vorrichtung minimiert werden.

Insbesondere ist bevorzugt,daß eine Antriebsvorrichtung an einer der Stirnflächen des Zylinders angebracht ist.

Eine bevorzugte Ausführungsform besteht darin, daß die bewegbaren Teile scheibenförmig sind und daß die dazwischen angeordneten feststehenden Teile plan sind. Dadurch wird eine besonders kompakte Bauweise der Vorrichtung erreicht.

Vorzugsweise ist ein Gaseintrittsanschluß an der einen Stirnseite und ein Gasaustrittsanschluß an der gegenüberliegenden Stirnseite des Zylinders angeordnet. Die Strömung des Mediums in der Vorrichtung wird so optimiert.

Dabei können die Öffnungen in jeweils einander gegenüberliegenden kreisringförmigen Bereichen der beweglichen und feststehenden Teile angebracht sein. Auf diese Weise wird eine sehr intensive Verwirbelung des Mediums erreicht.

Eine besonders einfache Herstellbarkeit der Vorrichtung wird dadurch erreicht, daß die bewegbaren Teile auf einer gemeinsamen Welle angeordnet sind.

Sofern die Vorrichtung zur Abscheidung eines Aerosols aus dem Medium dient, ist es bevorzugt, daß die Rotationsachse der beweglichen Teile waagerecht liegt, der Gaseintrittanschluß und Gasaustrittsanschluß an der Oberseite des Gehäuses angeordnet sind und an der Gehäuseunterseite zusätzlich eine Austrittsöffnung für die abgeschiedene Flüssigkeit vorgesehen ist.

Gemäß einer weiteren bevorzugten Ausführungsform der Erfindung weisen die beweglichen und feststehenden Teile die Form von Hohlzylindern auf und sind abwechselnd coaxial zueinander angebracht. Dadurch wird eine konstante Relativgeschwindigkeit zwischen den bewegbaren Teilen und dem durchströmenden Medium erzielt.

Hierbei ist es bevorzugt, daß ein Gaseintrittsanschluß am Mantel des Zylinders und ein Gasaustrittsanschluß an der unteren Stirnseite angeordnet ist. Durch die Zentrifugalwirkung der rotierenden Zylinder werden so abzuscheidende Stoffe stets von dem Gasaustritt wegbewegt und eine bessere Reinigung des Mediums kann erzielt werden.

Vorzugsweise sind auch hier die Öffnungen in jeweils einander gegenüberliegenden Bereichen der beweglichen und feststehenden Teile angebracht.

Eine besonders einfache Konstruktion ergibt sich, wenn die hohlzylinderförmigen bewegbaren Teile an einer gemeinsamen angetriebenen Trägerscheibe angeordnet sind.

Wenn diese Vorrichtung zur Abscheidung von Aerosolen aus dem Medium Verwendung finden soll, ist es besonders vorteilhaft, wenn an der Gehäuseunterseite zusätzlich eine Austrittsöffnung für die abgeschiedene Flüssigkeit vorgesehen ist.

Die erfindungsgemäßen Vorrichtungen können besonders wirtschaftlich hergestellt werden, wenn die feststehenden und die bewegbaren Teile als Lochbleche ausgebildet sind, dabei ist dann eine besonders günstige Beschichtung mit dem Katalysatormaterial, beispielsweise durch Aufsputtern, möglich.

Eine besonders leichte Bauweise der erfindungsgemäßen Vorrichtungen ergibt sich, wenn die feststehenden und die bewegbaren Teile als Gitter ausgebildet sind.

Vorzugsweise ist als Antrieb ein Elektromotor vorgesehen.

Um den Wirkungsgrad der Vorrichtung weiter zu verbessern, können die feststehenden und/oder die bewegbaren Teile der Vorrichtung hohl ausgebildet sein und mit einer Zuführungsvorrichtung für ein Hilfsgas in Verbindung stehen.

Sofern die bewegbaren Teile der Vorrichtung hohl ausgebildet sind, ist eine spezielle Form der Austrittsöffnungen für das Hilfsgas besonders vorteilhaft, bei der sie durch Auswölbungen gebildet sind, die entgegen der Drehrichtung ansteigen und eine nach rückwärts gerichtete Öffnung bilden. Dadurch kann ein noch stärkerer Unterdruck zum Ansaugen des Hilfsgases aufgrund der Rotation der bewegbaren Teile der Vorrichtung erzeugt werden, gleichzeitig wird dadurch ein Zusetzen der Öffnungen mit Verschmutzungen vermieden.

Besonders einfach läßt sich diese Vorrichtung realisieren, wenn das Hilfsgas Luft ist.

Bei einer reinen Katalysatorvorrichtung kann der Trägerkörper dabei beispielsweise als eine in der Ebene senkrecht zu der Stömungsrichtung liegende Scheibe ausgebildet sein. Dadurch entsteht eine sehr kleine Bauform des Katalysators.

Vorzugsweise wird der Trägerkörper jedoch als eine zylindrische oder kegelstumpf- oder kegelförmige Trommel ausgebildet. Dadurch können besonders große Gasmengen behandelt werden.

Da bei den erfindungsgemäßen Katalysatorvorrichtungen nur ein sehr geringer Druckabfall beim Durchströmen des Gases durch den Trägerkörper entsteht, besteht hier die Möglichkeit, beispielsweise bei Abgaskatalysatoren für Kraftfahrzeuge dem Abgasstrom Frischluft zuzuführen. Es muß somit die aufwendige Lamda-Regelung entfallen. Der Motor kann dann mit einem besseren Wirkungsgrad und/oder einer höheren Verdich-tung betrieben werden.

Es ist dann besonders bevorzugt, das weitere Medium (beispiels-weise die Frischluft) mittels einer angetriebenen Vorrichtung zum Fördern dieses Mediums der Eingangsseite des Katalysators zuzuführen.

Weiter ist es bevorzugt, bei trommelförmig ausgebildeten Trägerkörpern diese in einer Kammer anzuordnen, deren Querschnitt senkrecht zu der Rotationsachse der Trommel einem Vieleck entspricht.

Vorzugsweise können dabei im Inneren der Kammer zusätzlich Vorrichtungen vorgesehen sein, die einer Rotationsbewegung des Mediums entgegenwirken.

Vorzugsweise kann als Antriebsvorrichtung ein Elektromotor Verwendung finden. Ebenso kann ein Abgasantrieb, d.h. also beispielsweise ein vom Abgasstrom angetriebenes Turbinenrad, als Antriebsvorrichtung vorgesehen werden. Dabei kann dieses Turbinenrad auch direkt an dem trommelförmigen Trägerkörper angebracht sein. Ebenso ist denkbar, die Antriebsenergie von einem Motor zu entnehmen, dessen Abgase der Katalysatorvorrichtung zugeführt werden. Beispielsweise kann die Katalysatorvorrichtung einfach durch einen mit der Kurbelwelle des Motors in Verbindung stehenden Keilriemen angetrieben werden.

Besonders bevorzugt ist es, wenn der Trägerkörper aus einem oder mehreren feinen Gittern besteht, die mit der katalytischen Substanz beschichtet sind. Auf diese Weise läßt sich ein besonders leichter Trägerkörper konstruieren.

Dabei sind gewalzte (planierte) Gitter besonders vozuziehen, da diese aufgrund ihrer wesentlich glatteren Oberfläche einen erheblich geringeren Reibungswiderstand im Medium aufweisen.

Das erfindungsgemäße System arbeitet nach dem Trägheits- und Fliehkraftprinzip:

Bewegte Körper wollen in Bewegung bleiben, bewegte Körper wollen sich auf einer geraden Linie bewegen.

Der Gasstrom, der sich durch das Abgasrohr bewegt, hat bei einem Beispiel (Motor dreht mit 6.000 U/min., Hubraum 5 1, Abgasrohrdurchmesser 60 mm) eine Strömungsgeschwindigkeit von 88 m/sec. Die Oberflächengeschwindigkeit des Trägerkörpers liegt dabei zwischen 25 m/sec. bis 100 m/sec., je nach Drehzahl. Die Gasreaktion an der Oberfläche wird durch diese künstlich erzeugte Oberflächengeschwindigkeit vervielfacht. Entsprechende Messungen über die Erhöhung der Reaktionsgeschwindigkeit am Katalysator in Abhängigkeit von der Stömungsgeschwindigkeit wurden bereits vom Erfinder durchgeführt. Bei diesen Messungen wurde die Temperaturfehlmessung an Platin-Thermoperlen im Abgasstrom gemessen, die durch die katalytische Reaktion bewirkt werden. Der Anstieg der Temperatur verlief wie aus der Tabelle ersichtlich ist, in Abhängigkeit von der Geschwindigkeit des Abgasstromes:

| Anzeige beschichtet Pt-Thermo | Differenztemp. bei 2 1/min. Luftdurchsatz | Differenztemp. bei 4 1/min. Luftdurchsatz | Differenztemp. bei 6 1/min. Luftdurchsatz |
|---|---|---|---|
| °C | °C | °C | °C |
| 750 | 12,5 | 30,0 | 43,0 |
| 700 | 12,5 | 30,0 | 43,0 |
| 650 | 12,5 | 30,0 | 41,0 |
| 600 | 12,0 | 29,0 | 40,0 |
| 550 | 12,0 | 27,0 | 39,0 |
| 500 | 11,0 | 24,5 | 35,0 |
| 450 | 9,0 | 20,0 | 28,0 |
| 400 | 0,4 | 10,0 | 13,5 |

Diese Tabelle beruht auf einem CO-Anteil im Abgas von 1 %. Bei einem höheren CO-Gehalt des Abgases wurden Temperaturerhöhungen von über 100°C gemessen, obwohl die Thermoperle mit einem Durchmesser von 1 bis 1,5 mm dem Gasstrom mit der Temperatur von 400 bis 750°C ausgesetzt war. Damit wurde gezeigt, daß ein Temperaturunterschied von mehr als 100°C gegenüber der Abgastemperatur vorlag, und somit thermische Energie an der Thermoperle frei wurde, die durch die Nachverbrennung der im Abgas vorhandenen CO- und CH-Anteile an der Thermoperle entstand. Durch diesen Effekt wird es ermöglicht, erfindungsgemäß die herkömmlichen, oxidkeramisch aufgebauten Wabenkatalysatoren für PKW-Ottomotoren auf untoxische Metallkatalysatoren umzustellen.

Bevorzugte Ausführungsformen der Erfindung werden im folgenden anhand der beigefügten Zeichnung näher erläutert. Es zeigen:
- Fig.1: eine Ausführungsform der Erfindung als Axial-Filter in vertikal geschnittener Darstellung;
- Fig.2: eine Ausführungsform der Erfindung als Radial-Filter in vertikal geschnittener Darstellung;
- Fig.3: eine Ausführungsform der Erfindung als Axial-Filter mit zusätzlicher Hilfsluftzuführung durch die feststehenden Teile in vertikal geschnittener Darstellung;
- Fig.4: eine Ausführungsform der Erfindung als Axial-Filter mit zusätzlicher Hilfsluftzuführung durch die bewegbaren Teile in vertikal geschnittener Darstellung;
- Fig.5: eine Detailansicht einer Öffnung zum Hilfsgasaustritt aus Fig.4 in Schnittdarstellung;
- Fig.6: eine Detailansicht einer Öffnung zum Hilfsgasaustritt aus Fig.4 von vorne.
- Fig.7: eine Schnittdarstellung einer weiteren, besonders bevorzugten Ausführungsform der Erfindung, die sich insbesondere zur Reinigung von Dieselabgasen eignet;
- Fig.8: eine Darstellung des Details aus Fig.7; und
- Fig.9: eine Darstellung der Ausführungsform gem. Fig.7 von oben.

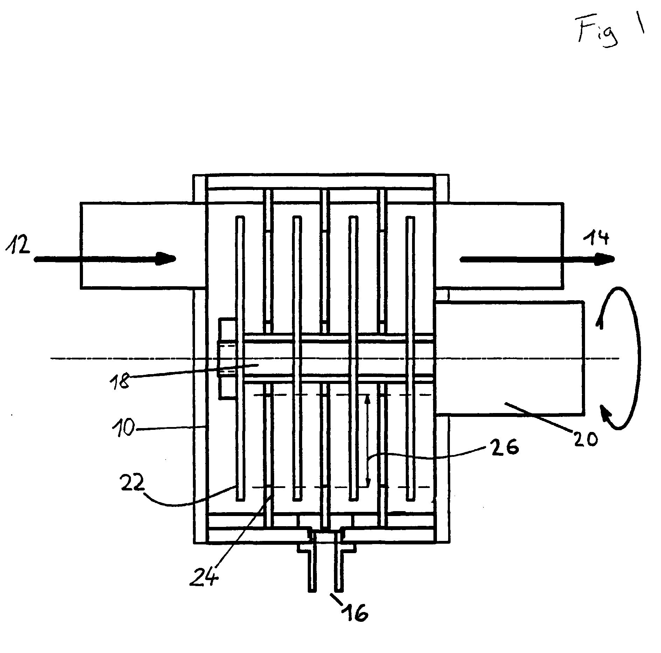

Fig.1 zeigt eine Ausführungsform der Erfindung, bei der das zu behandelnde Medium im wesentlichen horizontal durch ein Gehäuse 10 in der Form eines liegenden Zylinders strömt. An der linken Stirnseite des Zylinders ist im oberen Bereich ein Gaseintrittsanschluß 12 für das zu behandelnde Medium (beispielsweise Öldampf- und -nebelhaltige Luft, Abgase von Diesel- oder Ottomotoren) angeordnet. An der rechten Stirnseite des Zylinders ist im oberen Bereich ein Gasaustrittsanschluß 14 für das behandelte Medium angeordnet. Vorzugsweise sind die beiden Anschlüsse 12,14 nicht koaxial, sondern gegeneinander versetzt angeordnet.

An der Mantelfläche des Zylinders unten ist ein AustrittsanschluB 16 für die Abscheidungsprodukte (beispielsweise Ölkondensat) angebracht. Dieser Anschluß 16 kann natürlich entfallen, wenn die Vorrichtung als Katalysator Verwendung findet.

Koaxial zu der Achse der Zylinderform ist in dem Gehäuse 10 eine Welle 18 gelagert, die durch die rechte Stirnfläche tritt und mit einem dort angebrachten Druckluft- oder Elektromotor 20 verbunden ist. Auf der Welle 18 sind in gleichmäßigem Abstand zueinander vier Scheiben 22 als bewegbare Teile befestigt. Zwischen den Scheiben 22 sind drei feststehende Scheiben 24 mit gleichmäßigem Abstand zu den beweglichen Scheiben 22 an dem Gehäuse 10 rundum dicht befestigt. Die Welle 18 tritt durch die feststehenden Scheiben 24.

Sämtliche Scheiben 22,24 können aus Gittermaterial oder gelochtem Material bestehen. Vorzugsweise weisen die Scheiben 22,24 jeweils einander gegenüberliegende, kreisringförmige Bereiche 26 mit Löchern auf. Sofern die Vorrichtung als Katalysator dient, bestehen die Scheiben 22,24 aus dem katalytisch aktiven Material oder sind mit diesem zumindest teilweise beschichtet.

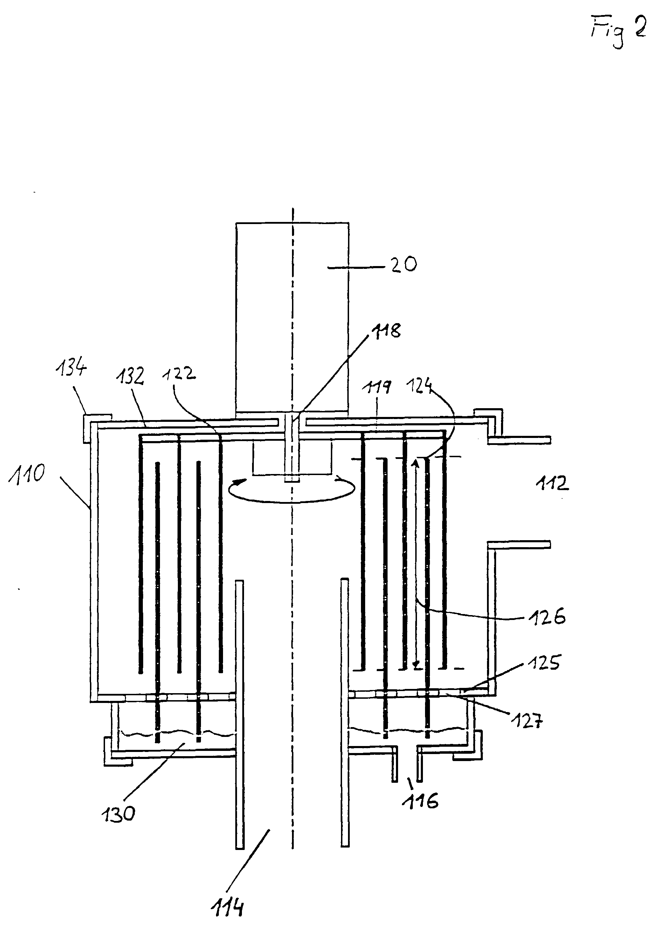

Fig.2 zeigt eine weitere Ausführungsform der Erfindung, bei der das zu behandelnde Medium durch ein Gehäuse 110 in der Form eines stehenden Zylinders strömt. An der rechten Mantelfläche des Zylinders ist im oberen Bereich ein Gaseintrittsanschluß 112 für das zu behandelnde Medium (beispielsweise Öldampf- und - nebelhaltige Luft, Abgase von Diesel- oder Ottomotoren) angeordnet. In der Mitte der unteren Stirnseite des Zylinders ist ein Gasaustrittsanschluß 114 für das behandelte Medium angeordnet. Seitlich in der unteren Stirnseite des Zylinders ist ein Austrittsanschluß 116 für die Abscheidungsprodukte (beispielsweise Ölkondensat) angebracht. Dieser Anschluß 116 kann natürlich entfallen, wenn die Vorrichtung als Katalysator Verwendung findet. Koaxial zu der Achse der Zylinderform ist in dem Gehäuse 110 eine Welle 118 gelagert, die durch die obere Stirnfläche tritt und mit einem dort angebrachten Druckluft- oder Elektromotor 20 verbunden ist. An der Welle 118 ist eine Trägerscheibe 119 befestigt, an der drei konzentrisch in gleichmäßigem Abstand zueinander angeordnete Hohlzylinder 122 mit unterschiedlichem Durchmesser als bewegbare Teile hängen. Zwischen den beweglichen Hohlzylindern 122 sind zwei feststehende Hohlzylinder 124 mit gle1chmäßigem Abstand zu den beweglichen Hohlzylindern 122 an einem waagerechten Zwischenboden 125 des Gehäuses 110 befestigt. Der Zwischenboden 125 weist neben den feststehenden Hohlzylindern 124 Öffnungen 127 auf, die in einen daruntergelegenen Sumpf 130 für die Abscheidungsprodukte führen.

Der Gasaustrittsanschluß 114 erstreckt sich als Rohr durch den Zwischenboden 125 hindurch bis etwa in die halbe Höhe des Gehäuses 110.

Die obere Stirnfläche des Gehäuses 110 ist als Deckel 132 ausgebildet, der mittels eines Verschlusses 134 befestigt ist und an dem der Motor 20 befestigt und die Welle 118 gelagert ist. Dadurch kann die Vorrichtung leicht auseinander genommen werden, wenn dies zu Wartungs- oder Reinigungsarbeiten erforderlich ist.

Sämtliche Hohlzylinder 122,124 können aus Gittermaterial oder gelochtem Material bestehen. Vorzugsweise weisen die Hohlzylinder 122,124 jeweils einander gegenüberliegende zylindrische Bereiche 126 mit Löchern auf. Sofern die Vorrichtung als Katalysator dient, bestehen die Hohlzylinder 122,124 aus dem katalytisch aktiven Material oder sind mit diesem zumindest teilweise beschichtet.

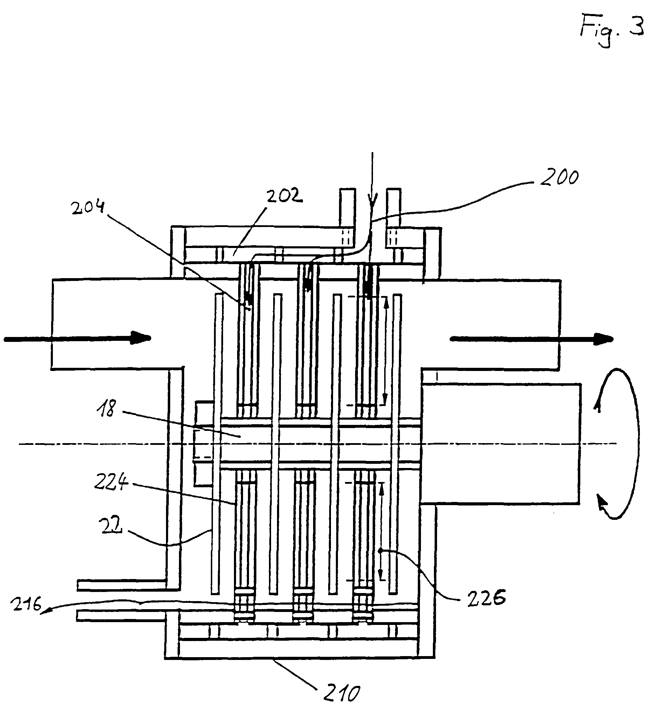

Figur 3 zeigt eine abgewandelte Ausführungsform des Axialfilters der Fig. 1, bei der zusätzlich ein Hilfsgas zugeführt werden kann. Dieses Hilfsgas dient bei der Verwendung der Vorrichtung als Abscheidevorrichtung für die Flüssigkeit aus einem Aerosol oder einem Dampf-Nebel-Gemisch zur Abkühlung des Mediums und damit zur Verstärkung der Kondensation. In diesem Fall findet vorzugsweise Frischluft als Hilfsgas Verwendung.

Sofern die Vorrichtung als Katalysator verwendet wird, kann bei Verwendung als Abgaskatalysator ebenfalls Frischluft zugeführt werden, um so den Lambda-Wert des Abgases zu verbessern. Es kann dann beispielsweise die aufwendige Labbda-Regelung des Katalysator-Ottomotors ohne Nachteile bei den Abgaswerten eingespart werden. Darüberhinaus kann das gefürchtete Überhitzen des Katalysators sicher vermieden werden. Bei Verwendung der Vorrichtung als chemischer Katalysator kann natürlich jedes beliebige Hilfsgas, aber auch beispielsweise ein Reaktionspartner zugeführt werden.

Bei der Ausführungsform gemäß Fig.3 sind die feststehenden Scheiben 224 jeweils doppelt vorhanden und schließen einen schmalen Hohlraum 204 ein. Dieser Hohlraum 204 ist in der Umgebung der Welle 18 ringförmig verschlossen. Die Mantelfläche des Gehäuses 210 ist ebenfalls doppelwandig ausgebildet und umschließt einen weiteren Hohlraum 202, mit dem die Hohlräume 204 rundum in Verbindung stehen. Ein Hilfsgasanschluß 200 mündet in den Hohlraum 202. Das Hilfsgas tritt also über den Hilfsgasanschluß 200 in den Hohlraum 202 in der Mantelfläche des Gehäuses 210 ein und gelangt von dort in die Hohlräume 204 zwischen den feststehenden Scheiben 224. Dabei kann das Hilfsgas die Scheiben 224 kühlen. Es gelangt dann durch kreisringförmige gelochte Bereiche 226 in den Scheiben 224 mit dem Medium in Berührung, welches ebenfalls durch die gelochten Bereiche 226 strömen muß. Entsprechende gelochte Bereiche 226 sind auch hier in den beweglichen Scheiben 22 vorgesehen. Alternativ können die beweglichen Scheiben 22 aus Gittermaterial bestehen.

Um den Hohlraum 202 nicht zu stören, kann der Austrittsanschluß 216 für die Abscheidungsprodukte in diesem Fall am unteren Ende einer der Stirnflächen des Gehäuses 210 seitlich herausgeführt sein.

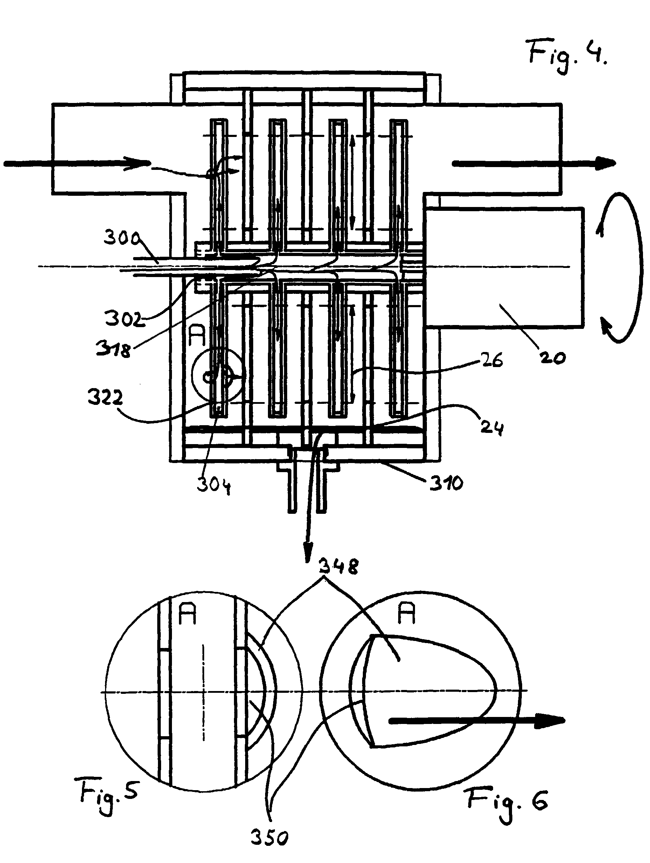

Eine weitere Ausführungsform des Axialfilters der Fig.1 mit einer Hilfsgaszuführung ist in Figur 4 dargestellt. Hierbei wird das Hilfsgas jedoch im Gegensatz zu Fig. 3 nicht durch die feststehenden, sondern durch die bewegbaren Teile der Vorrichtung zugeführt.

Der Hilfsgasanschluß 300 befindet sich bei dieser Ausführungsform in der Mitte der Stirnfläche des Gehäuses 310 gegenüber dem Motor 20. Er ist in Form eines feststehenden Rohres ausgebildet, welches im Gehäuse 310 im Inneren der in diesem Fall als Rohr ausgebildeten Welle 318 mündet. Die Abdichtung zwischen der Außenseite des Rohres der Hilfsgaszuführung und der Innenseite der Welle erfolgt über eine Labyrinthdichtung 302. Auf der Welle 318 sind vier Paare von jeweils zwei bewegbaren Scheiben 322 angeordnet. Zwischen diesen Scheiben 322 befindet sich ein schmaler Hohlraum 304, der mit dem Innenraum der Welle 318 in Verbindung steht und am Außenrand der Scheiben 322 verschlossen ist. Auch hier weisen die feststehenden und bewegbaren Scheiben 24,322 jeweils einander gegenüberliegende kreisringförmige, gelochte Bereiche 26 auf. Motorseitig ist der Innenraum der Welle 318 dicht abgeschlossen.

Das Hilfsgas wird hier also durch die Hilfsgaszuführung 300 in den Hohlraum in der Welle 318 zugeführt. Von dort verteilt es sich auf die Hohlräume 304 zwischen den einzelnen Scheiben 322. Dort kommt es durch die gelochten Bereiche 26 mit dem Medium in Berührung, welches ja ebenfalls durch die gelochten Bereiche strömen muß. Die Konstruktion der Fig.4 hat dabei den besonderen Vorteil, daß das Hilfsgas durch die Zentrifugalwirkung in den rotierenden Scheiben ohne weitere Hilfsmittel nach außen gefördert wird. Dadurch kann sogar ein leichter Überdruck des zu reinigenden Mediums gegenüber dem Hilfsgas ausgeglichen werden.

Um diese Förderwirkung weiter zu verbessern und gleichzeitig ein Zusetzen der Austrittsöffnungen zu verhindern, werden die Austrittsöffnungen vorzugsweise wie in Fig.5 und 6 gestaltet. Dabei befindet sich über der eigentlichen Austrittsöffnung ein gewölbter Deckel 348, der in Drehrichtung der Scheibe 322 geschlossen ausgebildet ist, und entgegen der Drehrichtung ansteigt. An der Rückseite dieses Deckels befindet sich dann die Öffnung 350, durch die das Hilfsgas austritt. Vorzugsweise kann diese Konstruktion dadurch hergestellt werden, daß die gewölbten Deckel 348 durch Pressen aus der zuvor planen Scheibe hergestellt werden, wobei der dafür benutzte Stempel eine entsprechende Abrißkante aufweist, durch die die Öffnung 350 entsteht. Dergestalt mit Deckeln 348 versehene Austrittsöffnungen können entweder auf allen Außenseiten der Scheiben 322 oder vorzugsweise nur auf der der Hauptströmungsrichtung des Mediums (große Pfeile in Fig.4) abgewandten Seite der Scheiben 322 vorgesehen sein.

Bei den Ausführungsformen der vorliegenden Erfindung mit rotierenden Scheiben 322 kann anstelle einer Scheibe 322 auch ein Flügelrad vorgesehen werden, welches dann gleichzeitig die Förderung des Mediums übernimmt.

Bei diesen Ausführungsformen der Erfindung können die 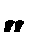 feststehenden" Teile auch in zu der Bewegungsrichtung der bewegten Teile entgegengesetzten Richtung angetrieben werden. Dadurch wird eine noch bessere Wirkung erzielt, dafür ist der konstruktive Aufwand größer.

Besonders einfach läßt sich diese Lösung bei der Ausführungsform der Fig.2 verwirklichen, da dabei lediglich die bisher feststehenden Hohlzylinder ebenfalls auf einer rotierenden Scheibe angeordnet werden müssen, deren Antrieb dann beispielsweise durch einen unten angeordneten Motor bewirkt wird.

Bei den Ausführungsformen gemäß Fig.1,3 und 4 muß zusätzlich außen eine parallel zur Welle 18 verlaufende Hilfswelle angebracht werden, die die in entgegengesetzter Richtung zu bewegenden Scheiben, beispielsweise über Zahnkränze, antreibt.

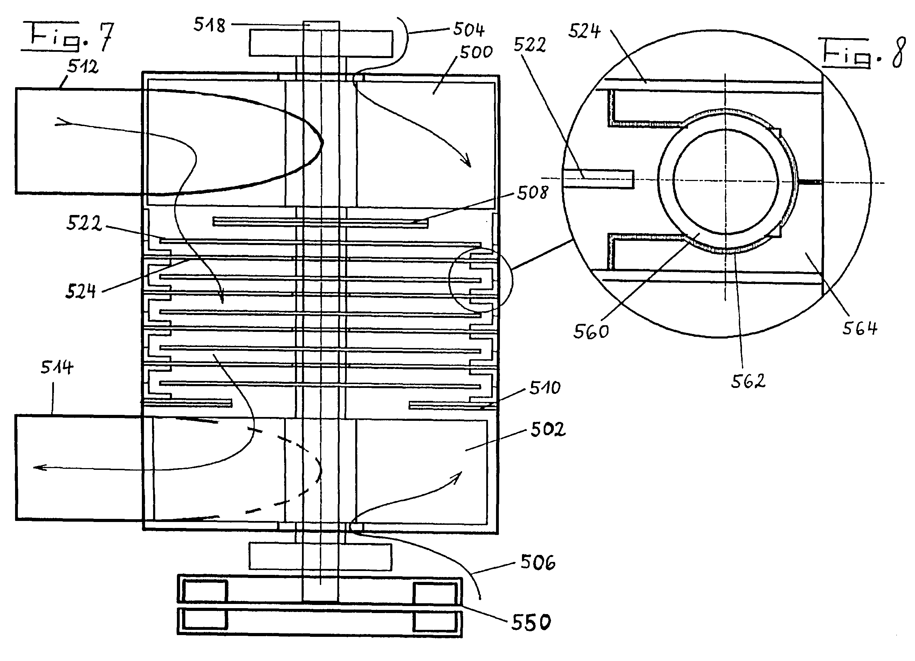

Fig.7, 8 und 9 zeigen eine weiter verbeserte Ausführungsform der Erfindung in Anlehnung an die Ausführungsform der Fig.1. Diese Ausführungsform eignet sich insbesondere zur Reinigung von Dieselabgasen vom Dieselruß. Dabei wird das zu reinigende Medium durch einen Gaseintrittsanschluß 512 an der Mantelfläche des zylindrischen Gehäuses zugeführt. Dieser Gaseintrittsanschluß 512 mündet an einer Antriebsvorrichtung 500 für die Welle 518, auf der die bewegbaren Scheiben 522 angeordnet sind. Die Antriebsvorrichtung 500 besteht dabei aus einem planen Blech, welches senkrecht zu der tangentialen Strömungsrichtung des eintretenden Gases und durch die Rotationsachse der Welle 518 hindurch verlaufend in einem Schlitz in dieser Welle 518 angebracht ist.

Die Anordnung aus bewegten und feststehenden Scheiben 522,524 entspricht der Fig 1. Gasaustrittsseitig schließt sich an diese Scheiben 522,524 eine weitere Antriebsvorrichtung 502 an, die ebenso wie die Antriebsvorrichtung 500 aufgebaut ist. Von dort aus verläßt das Gas die Vorrichtung durch einen ebenfalls an der Mantelfläche des zylindrischen Gehäuses tangential angeordneten Gasaustrittsanschluß 514.

Durch die erfindungsgemäße Gestaltung der Antriebsvorrichtungen 500,502 entsteht im Betrieb ein Unterdruck in den Antriebsvorrichtungen in der Nähe der Welle 518. Dieser Unterdruck kann zum Ansaugen eines Hilfsgases, beispielsweise von Umgebungsluft, entlang der Welle 518 genutzt werden. Hierzu genügt es, auf eine Andichtung der Durchführung der Welle 518 durch das Gehäuse zu verzichten. Die Pfeile 504,506 zeigen diese Hilfsluftströmung.

Um eine noch bessere Förderung des zu reinigenden Mediums zu erzielen, ist zwischen der gaseintrittsseitigen Antriebsvorrichtung 500 und den Scheiben 522,524 parallel zu diesen eine weitere undurchlässige Scheibe 508 angeordnet, die sich etwa bis zum halben Radius des Gehäuses erstreckt. Ebenso ist zwischen den Scheiben 522,524 und der gasaustrittsseitigen Antriebsvorrichtung 502 ein Ring 510 angeordnet, der sich von der Gehäusewand etwa den halben Radius nach innen erstreckt.

Bei der vorliegenden Erfindung kann die Welle 518 mit einem kollektorlosen Generator und Elektromotor 550 verbunden sein. Dieser kann dann beispielsweise während des Anlassens eines mit der erfindungsgemäßen Vorrichtung verbundenen Dieselmotors als Antriebsmotor wirken, da dann der meiste Ruß anfällt, während noch kein ausreichender Abgasstrom zum Antrieb der Vorrichtung erzeugt wird. Im Dauerbetrieb kann dann ein Teil der Abgasenergie zur Stromerzeugung genutzt werden, und gegebenenfalls eine Lichtmaschine eingespart werden.

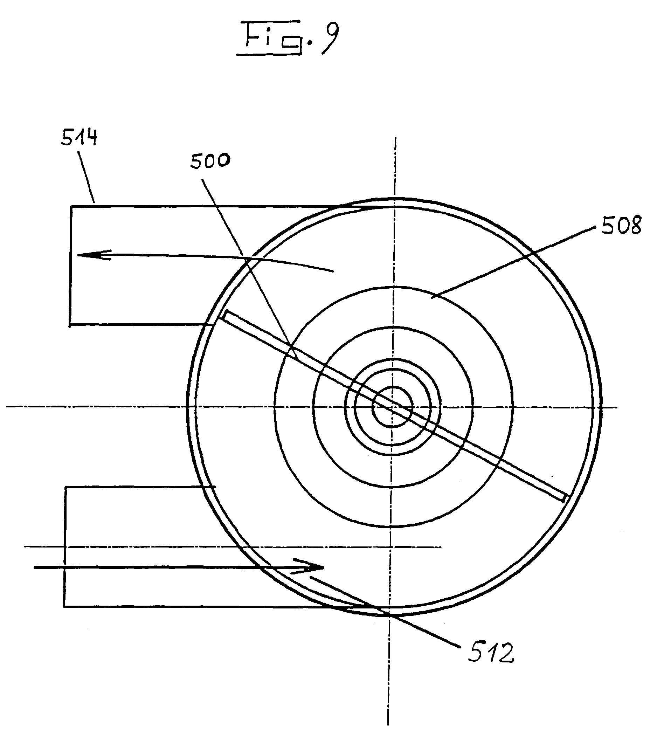

Das Detail der Fig.8 zeigt eine weitere bevorzugte Ausgestaltung der Erfindung: In den strömungsarmen Bereichen in der Nähe der Gehäusemantelfläche zwischen den feststehenden Scheiben 524 setzt sich beispielsweise ausgefilterter Ruß ab. Erfindungsgemäß sind in diesem Bereich zwischen den feststehenden Scheiben 524 elektrische Heizwendel 560 mittels einer keramischen Isolierschicht 562 auf Stützringen 564 angeordnet. Wenn während des Betriebes regelmäßig elektrischer Strom durch diese Heizwendel 560 geschickt wird, kann der anfallende Ruß jeweils abgebrannt werden, und muß nicht mühsam entfernt werden.

Bei allen Ausführungsformen der vorliegenden Erfindung kann auch ein weiterer Reaktionspartner in flüssiger Form eingespritzt werden. So kann beispielsweise bei der Reinigung von Dieselabgasen zusätzlich Harnstoff zugeführt werden, um die Stickoxide zu binden.

## Patentansprüche

1. Filter- oder Katalysatorvorrichtung, bei der ein fluides Medium in einem Gehäuse (10;110) möglichst vollständig mit der Oberfläche von im Gehäuse befindlichen Filter- oder Katalysatorelementen (22;24;122;124;224;322) mit einer Vielzahl von in Strömungsrichtung des Mediums verlaufenden, kleinen Öffnungen in Berührung gebracht wird, wobei feststehende (24;124;224) und bewegbare Filter- oder Katalysatorelemente (22;122;322) vorgesehen sind, und das fluide Medium so geführt ist, daß es abwechselnd jeweils feststehende (24;124;224) und bewegbare Filter- oder Katalysatorelemente (22;122;322) der Vorrichtung durchströmt.

2. Vorrichtung nach Anspruch 1, dadurch gekennzeichnet, daß die bewegbaren Teile (22;122;322) in einem zylinderförmigen Gehäuse (10;110;210;310) rotieren.

3. Vorrichtung nach Anspruch 2, dadurch gekennzeichnet, däß die Rotationsachse der bewegbaren Teile (22;122;322) coaxial zu der Zylinderform des Gehäuses (10;110;210;310) angeordnet ist.

4. Vorrichtung nach einem der vorhergehenden Ansprüche, dadurch gekennzeichnet, daß eine Antriebsvorrichtung (20) an einer der Stirnflächen des Zylinders angebracht ist.

5. Vorrichtung nach einem der vorhergehenden Ansprüche, dadurch gekennzeichnet, daß die bewegbaren Teile (22; 322) scheibenförmig sind und daß die dazwischen angeordneten feststehenden Teile (24;224) plan sind.

6. Vorrichtung nach Anspruch 5, dadurch gekennzeichnet, daß ein Gaseintrittsanschluß (12;112) an der einen Stirnseite und ein Gasaustrittsanschluß (14;114) an der gegenüberliegenden Stirnseite des Zylinders angeordnet ist.

7. Vorrichtung nach Anspruch 5 oder 6, dadurch gekennzeichnet, daß die Öffnungen in jeweils einander gegenüberliegenden kreisringförmigen Bereichen (26) der bewegbaren (22;322) und feststehenden Teile (24;224) angebracht sind.

8. Vorrichtung nach Anspruch 5, 6 oder 7, dadurch gekennzeichnet, daß die bewegbaren Teile (22;322) auf einer gemeinsamen Welle (18;318) angeordnet sind.

9. Vorrichtung nach Anspruch 6, 7 oder 8 zur Abscheidung von Flüssigkeiten aus einem Aerosol, dadurch gekennzeichnet, daß die Rotationsachse der bewegbaren Teile (22;322) waagerecht liegt, der Gaseintrittanschluß (12) und Gasaustrittsanschluß (14) an der Oberseite des Gehäuses (10;210;310) angeordnet sind und an der Gehäuseunterseite zusätzlich eine Austrittsöffnung (16) für die abgeschiedene Flüssigkeit vorgesehen ist.

10. Vorrichtung nach eine der Ansprüche 1 bis 4, dadurch gekennzeichnet, daß die bewegbaren (122) und feststehenden Teile (124) die Form von Hohlzylindern aufweisen und diese abwechselnd coaxial zueinander angebracht sind.

11. Vorrichtung nach Anspruch 10, dadurch gekennzeichnet, daß ein Gaseintrittsanschluß (112) am Mantel des Zylinders und ein Gasaustrittsanschluß (114) an der Stirnseite angeordnet ist.

12. Vorrichtung nach Anspruch 10 oder 11, dadurch gekennzeichnet, daß die Öffnungen in jeweils einander gegenüberliegenden Bereichen (126) der bewegbaren (122) und feststehenden Teile (124) angebracht sind.

13. Vorrichtung nach Anspruch 10,11 oder 12, dadurch gekennzeichnet, daß die hohlzylinderförmigen bewegbaren Teile (122) an einer gemeinsamen angetriebenen Trägerscheibe (119) angeordnet sind.

14. Vorrichtung nach Anspruch 10, 11, 12 oder 13 zur Anscheidung von Flüssigkeiten aus einem Aerosol, dadurch gekennzeichnet, daß an der Gehäuseunterseite zusätzlich eine Austrittsöffnung (116) für die abgeschiedene Flüssigkeit vorgesehen ist.

15. Vorrichtung nach einem der vorhergehenden Ansprüche, dadurch gekennzeichnet, daß die feststehenden (24;124;224) und/oder die bewegbaren (22;122;322) Teile als Lochbleche ausgebildet sind.

16. Vorrichtung nach einem der vorhergehenden Ansprüche, dadurch gekennzeichnet, daß die feststehenden (24;124;224) und/oder die bewegbaren (22;122;322) Teile als Gitter ausgebildet sind.

17. Vorrichtung nach einem der vorhergehenden Ansprüche, dadurch gekennzeichnet, daß als Antrieb ein Elektromotor (20) vorgesehen ist.

18. Vorrichtung nach einem der vorhergehenden Ansprüche, dadurch gekennzeichnet, daß die feststehenden und/oder die bewegbaren Teile (224;322) der Vorrichtung hohl ausgebildet sind und mit einer Zuführungsvorrichtung (200;300) für ein Hilfsgas in Verbindung stehen.

19. Vorrichtung nach Anspruch 18, dadurch gekennzeichnet, daß die bewegbaren Teile (322) der Vorrichtung hohl ausgebildet sind und Austrittsöffnungen für das Hilfsgas aufweisen, die durch Auswölbungen (348) gebildet sind, die entgegen der Drehrichtung ansteigen und eine nach rückwärts gerichtete Öffnung (350) bilden.

20. Vorrichtung nach Anspruch 18 oder 19, dadurch gekennzeichnet, daß das Hilfsgas Luft ist.

## Claims

1. Filter or catalyst apparatus in which a fluid medium in a housing (10; 110) is brought as completely as possible into contact with the surface of an arrangement of filter or catalyst elements (22; 24; 122; 124; 224; 322) positioned in the housing and having a plurality of small openings extending in the direction of flow of the medium, wherein stationary (24; 124; 224) and movable filter or catalyst elements (22; 122; 322) are provided and the fluid medium is guided in such a way that it flows alternately through respective stationary (24; 124; 224) and movable filter or catalyst elements (22; 122; 322) of the apparatus.

2. Apparatus according to claim 1, characterized in that the movable parts (22; 122; 322) rotate in a cylindrical housing (10; 110; 210; 310).

3. Apparatus according to claim 2, characterized in that the axis of rotation of the movable parts (22; 122; 322) is arranged coaxially with the cylindrical shape of the housing (10; 110; 210; 310).

4. Apparatus according to one of the preceding claims, characterized in that a drive device (20) is disposed at one of the end faces of the cylinder.

5. Apparatus according to one of the preceding claims, characterized in that the movable parts (22; 322) are discshaped and that the stationary parts (24; 224) arranged therebetween are flat.

6. Apparatus according to claim 5, characterized in that a gas intake connection (12; 112) is arranged at the one end of the cylinder and a gas outlet connection (14; 114) is arranged at the opposite end of the cylinder.

7. Apparatus according to claim 5 or claim 6, characterized in that the openings are arranged in respective mutually oppositely disposed regions (26), in the form of circular rings, of the movable parts (22; 322) and the stationary parts (24; 224).

8. Apparatus according to claim 5, claim 6 or claim 7, characterized in that the movable parts (22; 322) are arranged on a common shaft (18; 318).

9. Apparatus according to claim 6, claim 7 or claim 8 for separating liquids from an aerosol, characterized in that the axis of rotation of the movable parts (22; 322) is horizontal, the gas intake connection (12) and the gas outlet connection (14) are arranged at the top side of the housing (10; 210; 310) and in addition an outlet opening (16) for the separated liquid is provided at the underside of the housing.

10. Apparatus according to one of claims 1 to 4, characterized in that the movable (122) and stationary parts (124) are in the shape of hollow cylinders and they are disposed alternately coaxially relative to each other.

11. Apparatus according to claim 10, characterized in that a gas intake connection (112) is arranged at the periphery of the cylinder and a gas outlet connection (114) is arranged at the end.

12. Apparatus according to claim 10 or claim 11, characterized in that the openings are disposed in respective mutually oppositely arranged regions (126) of the movable (122) and stationary parts (124).

13. Apparatus according to claim 10, claim 11 or claim 12, characterized in that the movable parts (122) in the form of hollow cylinders are arranged on a common driven carrier disc (119).

14. Apparatus according to claim 10, claim 11, claim 12 or claim 13 for separating liquids from an aerosol, characterized in that in addition an outlet opening (116) for the separated liquid is provided at the underside of the housing.

15. Apparatus according to one of the preceding claims, characterized in that the stationary (24; 124; 224) and/or the movable (22; 122; 322) parts are in the form of apertured plates.

16. Apparatus according to one of the preceding claims, characterized in that the stationary (24; 124; 224) and/or the movable (22; 122; 322) parts are in the form of grills.

17. Apparatus according to one of the preceding claims, characterized in that an electric motor (20) is provided as the drive.

18. Apparatus according to one of the preceding claims, characterized in that the stationary and/or movable parts (224; 322) of the arrangement are hollow and communicate with a feed device (200; 300) for an auxiliary gas.

19. Apparatus according to claim 18, characterized in that the movable parts (322) of the arrangement are hollow and have outlet openings for the auxiliary gas, which are formed by outward bulge portions (348) which rise in the opposite direction to the direction of rotation and form a rearwardly directed opening (350).

20. Apparatus according to claim 18 or claim 19, characterized in that the auxiliary gas is air.

## Revendications

1. Appareil catalyseur ou appareil de filtration, dans lequel milieu fluide contenu dans un boîtier (10 ,110) est mis aussi complètement que possible en contact avec la surface d'éléments catalyseurs ou de filtration (22, 24, 122, 124, 224, 322) disposés dans le boîtier et munis de plusieurs petites ouvertures qui s'étendent dans le sens de l'écoulement du milieu fluide, des éléments catalyseurs ou de filtration stationnaires (24, 124, 224) et des éléments catalyseurs ou de filtration mobiles (22, 122, 322) étant prévus, et dans lequel le milieu fluide est dirige de manière à ce qu'il passe alternativement à travers les éléments stationnaires (24, 124, 224) et les éléments mobiles (22, 122, 322) de l'appareil.

2. Appareil selon la revendication 1, caractérisé en ce que les éléments mobiles (22, 122, 322) tournent dans un boîtier cylindrique (10, 110, 210, 310).

3. Appareil selon la revendication 2, caractérisé en ce que l'axe de rotation des éléments mobiles (22, 122, 322) est place coaxialement à la forme cylindrique du boîtier (10, 110, 210, 310).

4. Appareil selon l'une des revendications précédentes, caractérisé en ce qu'un appareil d'entraînement (20) est dispose sur l'une des faces d'extrémité du cylindre.

5. Appareil selon l'une des revendications précédentes, caractérisé en ce que les éléments mobiles (22, 322) sont en forme de disque et en ce que les éléments stationnaires (24, 224) placés entre les éléments mobiles sont plats.

6. Appareil selon la revendication 5, caractérisé en ce qu'un raccord d'entrée de gaz (12, 112) est placé sur l'une des faces d'extrémité du cylindre, et un raccord de sortie de gaz (14, 114) est disposé sur Ia face d'extrémité opposée du cylindre.

7. Appareil selon Ia revendication 5 ou 6, caractérisé en ce que les ouvertures sont disposées dans des zones mutuellement opposées (26) en forme d'anneaux circulaires des éléments mobiles (22, 322) et d'éléments stationnaires (24, 224).

8. Appareil selon Ia revendication 5, 6 ou 7 dont les éléments mobiles (22, 322) sont placés sur un arbre commun (18, 318).

9. Appareil selon la revendication 6, 7 ou 8 pour séparer des liquides à partie d'aérosols, caractérisé en ce que l'axe de rotation des éléments mobiles (22, 322) est horizontal, le raccord d'entrée de gaz (12) et le raccord de sortie de gaz (14) sont disposés dans la partie supérieure du boîtier (10, 210, 310) et une ouverture de sortie (16) pour le liquide séparé est en outre prévue dans la partie inférieure du boîtier.

10. Appareil selon l'une des revendications 1 à 4, caractérisé en ce que les éléments mobiles (122) et les éléments stationnaires (124) sont en forme de cylindres creux et sont disposés de façon alternée et coaxialement les uns par rapport aux autres.

11. Appareil selon la revendication 10, caractérisé en ce que le raccord d'entrée de gaz (122) est disposé à la périphérie du cylindre et le raccord de sortie de gaz (114) est placé sur la face d'extrémité.

12. Appareil selon la revendication 10 ou 11, caractérisé en ce que les ouvertures sont disposées dans des zones mutuellement opposées (126) des éléments mobiles (122) et des éléments stationnaires (124).

13. Appareil selon la revendication 10, 11 ou 12, caractérisé en ce que les éléments mobiles (122) en forme de cylindres creux sont fixés à un disque porteur mené commun (119).

14. Appareil selon la revendication 10, 11, 12 ou 13 pour séparer des liquides à partir d'aérosols, caractérisé en ce qu'une ouverture de sortie (116) pour les liquides séparés est prévue dans la partie inférieure du boîtier.

15. Appareil selon l'une des revendications précédentes caractérisé en ce que les éléments stationnaires (24, 124, 224) et/ou les éléments mobiles (22, 122, 322) sont réalisés sous forme de tôles perforées.

16. Appareil selon l'une des revendications précédentes, caractérisé en ce que les éléments stationnaires (24, 124, 224) et/ou les éléments mobiles (22, 122, 322) sont sous forme de grilles.

17. Appareil selon l'une des revendications précédentes, caractérisé en ce qu'un moteur électrique (20) est utilisé comme moyen d'entraînement.

18. Appareil selon l'une des revendications précédentes, caractérisé en ce que les éléments stationnaires et/ou les éléments mobiles (224, 322) de l'appareil sont creux et communiquent avec un appareil d'alimentation en gaz auxiliaire (200, 300).

19. Appareil selon la revendication 18, caractérisé en ce que les éléments mobiles (322) de l'appareil sont creux et comprennent des ouvertures de sortie pour le gaz auxiliaire qui sont formées par des parties (348) bombées vers l'extérieur, qui s'élèvent dans la direction opposée au sens de rotation et forment une ouverture (350) dirigée vers l'arrière.

20. Appareil selon la revendication 18 ou 19, caractérisé en ce que le gaz auxiliaire est de l'air.
